# EUROPEAN PATENT APPLICATION

(11) **EP 4 796 505 A1**
(43) Date of publication of application: **26.08.2026**
(21) Application number: 24861300.2
(22) Date of filing: 24.07.2024
(51) Int. Cl.: C02F 1/60, C02F 1/66, C02F 103/38, C02F 101/12

(54) **METHOD FOR DISPOSAL OF CHLOROSILANE-BASED COMPOUNDS**

(30) Priority: 22.12.2023 KR 20230189542
(71) Applicant: LG Chem, Ltd., Seoul 07336 (KR)
(72) Inventor: OH, Suk Yung, Daejeon 34122 (KR); KO, Jun Seok, Daejeon 34122 (KR); JEON, Byung Chul, Daejeon 34122 (KR); LEE, Sung Hyeon, Daejeon 34122 (KR); YOON, Su Ji, Daejeon 34122 (KR); KIM, Hyun Ho, Daejeon 34122 (KR)
(74) Representative: Hoffmann Eitle
(86) International application number: PCT/KR2024/010696
(87) International publication number: WO 2025/135364

(57) **Abstract**

Provided is a method for treating a chlorosilane-based compound including: introducing a feed stream including a chlorosilane-based compound to a liquid area of a column, the liquid area including a first aqueous solution in a column and reacting the chlorosilane-based compound with water to obtain an upper discharge flow of a liquid area including a hydrogen chloride gas; introducing the upper discharge flow of the liquid area to a packing area placed above the liquid area; supplying a second aqueous solution including a basic material to a distribution area placed above the packing area and introducing the second aqueous solution supplied to the distribution area to the packing area; and neutralizing the hydrogen chloride gas included in the upper discharge flow of the liquid area and the basic material included in the second aqueous solution in the packing area to obtain a lower discharge flow of the packing area including a chloride salt and an upper discharge stream of the column.

## Description

### [Technical Field]

### CROSS-REFERENCE TO RELATED APPLICATIONS

The present application claims the benefit of priority to Korean Patent Application No. 10-2023-0189542, filed on December 22, 2023, the entire contents of which are incorporated herein as a part of the specification.

### Technical Field

The present invention relates to a method for treating a chlorosilane-based compound, and more particularly, to a method for treating a chlorosilane-based compound by introducing a feed stream including a chlorosilane-based compound to a liquid area including a first aqueous solution and bringing an upper discharge flow of the liquid area into contact with a second aqueous solution in a countercurrent manner.

### [Background Art]

In general, a styrene-butadiene copolymer is used as synthetic rubber, and may be used in various fields due to its characteristics, such as better wear resistance and heat resistance than natural rubber, stable scorchability, and easy processability. During the manufacturing process of the styrene-butadiene copolymer, a chlorosilane-based coupling agent may be added for improving the physical properties of products. When a stream including a gaseous chlorosilane-based compound discharged from a storage tank in which the chlorosilane-based coupling agent is stored is incinerated in a common manner, harmful gas such as dioxin may occur due to chlorine. Therefore, in order to treat the chlorosilane-based compound safely, the stream including a gaseous chlorosilane-based compound is introduced to a water phase area in which water is present in a column, and the chlorosilane-based compound and water are reacted to produce hydrogen chloride, which is dissolved in water. Thus, discharge of hydrogen chloride which is inevitably produced in treating the chlorosilane-based compound to the upper portion of the column was intended to be reduced.

However, due to the strengthening of current environmental regulations, standards for a hydrogen chloride emission concentration have been lowered, and in order to meet the standards, hydrogen chloride emission should be further reduced. That is, technology which may prevent emission of hazardous substances which inevitably occur in treating the chlorosilane-based compound in an environmentally friendly manner is needed.

### [Disclosure]

### [Technical Problem]

In order to solve the problems mentioned in the Background Art, an object of the present invention is to provide an effect of reducing emission of chlorine which is a hazardous substance while treating a chlorosilane-based compound in an environmentally friendly manner.

### [Technical Solution]

In one general aspect, a method for treating a chlorosilane-based compound includes: introducing a feed stream including a chlorosilane-based compound to a liquid area including a first aqueous solution in a column and reacting the chlorosilane-based compound with water to obtain an upper discharge flow of the liquid area including a hydrogen chloride gas; introducing the upper discharge flow of the liquid area to a packing area placed above the liquid area; supplying a second aqueous solution including a basic material to a distribution area placed above the packing area and introducing the second aqueous solution supplied to the distribution area to the packing area; and neutralizing the hydrogen chloride gas included in the upper discharge flow of the liquid area and the basic material included in the second aqueous solution in the packing area to obtain a lower discharge flow of the packing area including a chloride salt and an upper discharge stream of the column.

### [Advantageous Effects]

According to the method for treating a chlorosilane-based compound of the present invention, chlorine included in the chlorosilane-based compound may be primarily converted into hydrogen chloride, by primarily reacting a gaseous chlorosilane-based compound included in a feed stream with water. A part of the hydrogen chloride converted as such may be treated as wastewater with a hydrochloric acid aqueous solution dissolved in water. Meanwhile, when hydrogen chloride which is not dissolved in water among the converted hydrogen chloride is discharged as hydrogen chloride gas, it may cause an atmospheric environmental problem, and thus, the hydrogen chloride gas may be treated as wastewater in the form of a chloride salt by further neutralizing the hydrogen chloride gas with a basic compound. Thus, environmentally friendly treatment of chlorine is allowed as compared with the case of discharging the chlorosilane-based compound into the atmosphere without a separate treatment or treating the chlorosilane-based compound by incineration.

Furthermore, since the method for treating a chlorosilane-based compound according to the present invention adopts a water-based treatment system based on water, costs involved in the treatment are low.

In addition, according to the method for treating a chlorosilane-based compound according to the present invention, when the chlorosilane-based compound is treated based on water, that is, the chlorosilane-based compound is reacted with water in an aqueous solution, by-products which are easily produced in such case, for example, inorganic compounds or polymers are prevented from being produced, thereby preventing device process disadvantage in the device/process by the by-products.

### [Description of Drawings]

FIG. 1 is a process diagram showing a method for treating a chlorosilane-based compound according to an exemplary embodiment of the present invention.
FIGS. 2 and 3 are process diagrams showing methods for treating a chlorosilane-based compound according to the comparative examples of the present invention.

### [Best Mode]

The terms and words used in the description and claims of the present invention are not to be construed limitedly as having general or dictionary meanings but are to be construed as having meanings and concepts meeting the technical ideas of the present invention, based on a principle that the inventors are able to appropriately define the concepts of terms in order to describe their own inventions in the best mode.

The term "stream" in the present invention may refer to a discharge flow of a fluid in a process, or may refer to the fluid itself flowing in a pipe. Specifically, the stream may refer to both a fluid itself flowing in a pipe connecting each device and a discharge flow of the fluid. In addition, the fluid may refer to a gas or liquid, and a case in which a solid component is included in the fluid is not excluded.

In addition, in the present invention, HCl is referred to as hydrogen chloride or hydrochloric acid, regardless of its conditions being dissolved in water, and unless specifically stated, hydrogen chloride and hydrochloric acid refer to the same HCl.

In general, in treating unnecessary substances occurring during a process, that is, wastes, a method of incinerating the wastes by combustion may be performed. However, when the wastes are, for example, a compound including chlorine, harmful substances such as dioxin may occur, and thus, the method may be a big problem in terms of the environment. Therefore, in treating the compound including chlorine, the compound needs to be treated by an environmentally friendly method rather than an incineration method by combustion. Regarding this, the present invention may treat a chlorosilane-based compound based on water rather than by incineration which is generally performed, and the method for treating a chlorosilane-based compound is as follows.

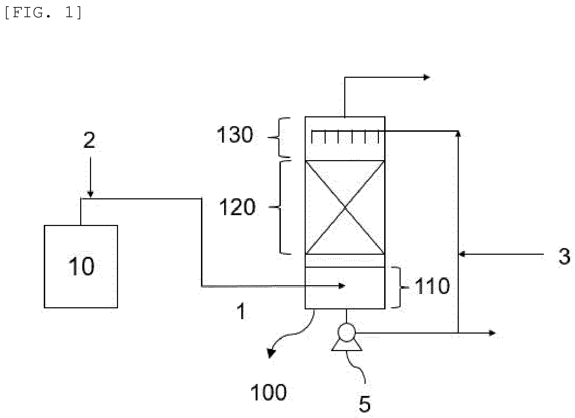

Hereinafter, an apparatus for performing a method for treating a chlorosilane-based compound according to an exemplary embodiment will be described with reference to FIG. 1. Specifically, an apparatus for implementing the method for treating a chlorosilane-based compound may include a column 100. The column 100 may include a liquid area 110, a packing area 120 placed above the liquid area 110, and a distribution area 130 placed above the packing area 120. The liquid area 110 may refer to an area in which a first aqueous solution is filled into the column 100, and may be an area to which a feed stream 1 including the chlorosilane-based compound is introduced. The packing area 120 may refer to an area in which packing as a filler is included in the column 100, and may be spaced apart from the liquid area 110. The distribution area 130 may be an area to which a second aqueous solution including a basic material is introduced.

A method for treating a chlorosilane-based compound using the column 100 is schematically as follows. The feed stream 1 is introduced to the liquid area 110 and the chlorosilane-based compound and water may react to produce hydrogen chloride. A part of hydrogen chloride produced as such is discharged to a lower portion of the column 100 as a hydrochloric acid aqueous solution dissolved in water, and hydrogen chloride which is not dissolved in water may rise as a hydrogen chloride gas and be introduced to the packing area 120. Herein, a lower portion of the column 100 may be determined depending on the direction in which the liquid falls in the column 100 based on the gravity direction, and for example, the liquid supplied to the upper portion of the column 100 may be discharged to the lower portion of the column 100 sequentially through the distribution area 130, the packing area 120, and the liquid area 110. A part of the hydrochloric acid aqueous solution discharged to the lower portion of the column 100 may be mixed with a basic material and supplied to the distribution area 130 as a second aqueous solution. The second aqueous solution supplied to the distribution area 130 may be introduced to the packing area 120, and the basic material and the hydrogen chloride gas may be neutralized in the packing area 120 to produce a chloride salt. The chloride salt produced as such may move downward into the liquid area 110. Meanwhile, since the hydrogen chloride gas is neutralized with the basic material in the packing area 120, it may be environmentally preferred that the hydrogen chloride gas is not discharged to the upper portion of the column 100 through the distribution area 130. Herein, the upper portion of the column 100 may be determined depending on the direction in which gas rises in the column 100 based on the gravity direction, and for example, the gas supplied to the lower portion of the column 100 may be discharged to the upper portion of the column 100 sequentially through the liquid area 110, the packing area 120, and the distribution column 130.

More specifically, the method for treating a chlorosilane-based compound according to an exemplary embodiment of the present invention may include: introducing a feed stream 1 including a chlorosilane-based compound to a liquid area 110 including a first aqueous solution in a column and reacting the chlorosilane-based compound with water to obtain an upper discharge flow of the liquid area 110 including a hydrogen chloride gas; introducing the upper discharge flow of the liquid area 110 to a packing area 120 placed above the liquid area; supplying a second aqueous solution including a basic material to a distribution area 130 placed above the packing area 120 and introducing the second aqueous solution supplied to the distribution area 130 to the packing area; and neutralizing the hydrogen chloride gas included in the upper discharge flow of the liquid area 110 and the basic material included in the second aqueous solution in the packing area 120 to obtain a lower discharge flow of the packing area including a chloride salt and an upper discharge stream of the column.

Specifically, the method for treating a chlorosilane-based compound according to an exemplary embodiment of the present invention may include introducing a feed stream 1 including a chlorosilane-based compound to a liquid area 110 including a first aqueous solution in a column 100 and reacting the chlorosilane-based compound with water to obtain an upper discharge flow of the liquid area 110 including hydrogen chloride gas.

Specifically, the feed stream 1 including the chlorosilane-based compound may be a gaseous stream discharged from the upper portion of a storage tank 10 in which the chlorosilane-based compound is stored. The chlorosilane-based compound may be, for example, a chlorosilane-based coupling agent used during a process of preparing a styrene-butadiene copolymer. More specifically, the number of storage tank 10 may be one or two or more, and when the number of storage tank 10 is two or more, two or more types of chlorosilane-based compounds discharged from each storage tank may be simultaneously treated.

According to the present invention, the chlorosilane-based compound may include one or more of dichlorosilane (H₂Cl₂Si), trichlorosilane (HCl₃Si), hexachlorodisilane (Cl₆Si₂), silicon tetrachloride (tetrachlorosilane, SiCl₄), and dimethyldichlorosilane (C₂H₆Cl₂Si).

Meanwhile, as described above, when the chlorosilane-based compound including chlorine is incinerated, harmful gas such as dioxin occurs. Therefore, in treating the chlorosilane-based compound including chlorine, it may not be environmentally preferred to incinerate the chlorosilane-based compound. That is, the chlorosilane-based compound needs to be treated by an environmentally friendly method rather than incineration of the chlorosilane-based compound.

According to the present invention, the feed stream 1 including the chlorosilane-based compound may be introduced to the liquid area 110 of the column 100 to react the chlorosilane-based compound and water. Herein, the feed stream 1 may be introduced to the liquid area 110 through, for example, a pipe connecting the upper portion of the storage tank 10 and the lower portion of the column 100. More specifically, the pipe which moves the feed stream 1 may be provided to protrude into the liquid area 110. When the feed stream 1 is introduced into the liquid area 110 through the pipe, the gaseous chlorosilane-based compound may be more effectively dispersed in the liquid area 110.

According to the present invention, when a length of a cross section of the liquid area 110 in a vertical direction is 100%, the feed stream 1 may be introduced at a height of 20 to 80% downward from the liquid level of the liquid area 110, based on 0% of the liquid level of the liquid area 110. As such, when the feed stream 1 is introduced at the height in the range of the liquid area 110, dispersion efficiency of the feed stream 1 which is a gas phase in the liquid area 110 may be increased to promote a reaction occurring in the liquid area 110. Therefore, the amount of the chlorosilane-based compound included in the feed stream 1, which does not react with water and rises from the liquid area 110 as an unreacted chlorosilane-based compound, may be minimized.

Specifically, the feed stream 1 including the chlorosilane-based compound may further include a nitrogen gas. The feed stream 1 may be a stream discharged from the upper portion of the storage tank 10, that is, a mixed stream in which the upper discharge stream of the storage tank is mixed with a nitrogen stream 2 including the nitrogen gas. Therefore, the feed stream 1 may include the nitrogen gas and the chlorosilane-based compound. As a specific example, the upper discharge stream of the storage tank may be moved through the upper pipe of the storage tank provided in the upper portion of the storage tank 10, and the nitrogen stream 2 may be moved through a nitrogen supply pipe connected to the upper pipe of the storage tank.

Specifically, as such, by continuously adding the nitrogen gas, pressure in the feed stream 1 may be maintained higher than pressure in the liquid area 110 in the column 100. Thus, the first aqueous solution present in the liquid area 110 may be prevented from flowing back to the storage tank 10. In addition, the feed stream 1 may be continuously introduced to the liquid area 110 including the first aqueous solution.

Meanwhile, when the chlorosilane-based compound included in the feed stream 1 is silicon tetrachloride and dimethyldichlorosilane, the chlorosilane-based compound and water may react according to the following Reaction Formulae 1 and 2 in the liquid area 110:

[Reaction Formula 1] SiCl₄ + 2H₂O → SiO₂ + 4HCl

[Reaction Formula 2] (CH₃)2-Si-Cl₂ + 2H₂O → HO-[(CH₃)₂-Si]-OH + 2HCl

Referring to the above Reaction Formulae 1 and 2, when the chlorosilane-based compound reacts with water, hydrogen chloride or hydrochloric acid (HCl) may be produced, and it may be dissolved in water and included in the first aqueous solution, or hydrogen chloride which is not dissolved in water may rise in a gaseous form. As such, when the hydrogen chloride is in contact with water, it is easily dissociated in water, and thus, it is easy to dissolve the hydrogen chloride in water and treat it as wastewater even in the case of production of the hydrogen chloride.

Meanwhile, when the chlorosilane-based compound and water react, by-products other than hydrochloric acid may be produced, and for example, when the chlorosilane-based compound is silicon tetrachloride, silicon dioxide (SiO₂) is produced, and when the chlorosilane-based compound is trimethylchlorosilane, dimethylsilanediol (C₂H₈O2Si) may be produced. In this case, the silicon dioxide may be included in the first aqueous solution as a solid phase in the form of being deposited in the first aqueous solution, and the dimethylsilanediol may be included in the first aqueous solution as a liquid phase in the form of being dissolved in the first aqueous solution.

Meanwhile, the lower discharge flow of the packing area 120 may be introduced to the liquid area 110. Herein, the flow may refer to a fluid moving in the column 100. The lower discharge flow of the packing area 120 may include a basic material which is not neutralized with hydrogen chloride in the packing area 120. Therefore, the hydrogen chloride and the basic material may be also neutralized in the liquid area 110 to produce a chloride salt. Thus, the amount of hydrogen chloride gas included in the upper discharge flow of the liquid area 110 may be decreased.

Meanwhile, the components and the composition of the first aqueous solution included in the liquid area 110 may be changed according to the progress of the reaction performed in the liquid area 110, but may remain constant after the treatment process of the chlorosilane-based compound performed as a continuous process reaches a steady state. For example, the components and the composition of the first aqueous solution may be affected by the feed stream 1 and the lower discharge flow of the packing area 120. Specifically, the first aqueous solution may be a solution including water as a main component when the feed stream 1 is first introduced to the liquid area 110. However, as the treatment process of the chlorosilane-based compound is performed, the first aqueous solution may include a reactant included in the feed stream 1, the liquid product by the reaction occurring in the liquid area 110, and the components in the lower discharge flow of the packing area 120.

Meanwhile, a temperature of the liquid area 110 may be 20 to 50°C, specifically 25 to 40°C. More specifically, when the temperature of the liquid area 110 is lower than 20°C, a neutralization reaction of hydrogen chloride and the basic material proceeds slowly in the liquid area 110, so that the amount of the hydrogen chloride gas included in the upper discharge flow of the liquid area 110 may be increased. Meanwhile, the temperature of the liquid area 110 is higher than 50°C, a side reaction is promoted in the liquid area 110 to cause fouling in the lower discharge stream of the column 100.

According to an exemplary embodiment of the present invention, a pH of the first aqueous solution included in the liquid area 110 may be maintained at 6 to 9. Control of the pH as such may be performed by adjusting the concentration of the basic material included in the second aqueous solution supplied to the distribution area 130 by the flow rate of a basic stream 3 described later.

Specifically, when the pH of the first aqueous solution in the liquid area 110 is within the range, production of polymer due to a side reaction occurring when the chlorosilane-based compound and water react in the liquid area 110 may be prevented. Thus, blockage of a pipe or an apparatus by the polymer, that is, possibility of fouling may be minimized. Specifically, when the fouling does not occur, cleaning costs incurred for cleaning a part fouled by the polymer may be reduced, and the process may be operated for a long time without shutdown of the process, which is thus preferred. For example, the fouling may occur, when the chlorosilane-based compound is dimethyldichlorosilane and the dimethyldichlorosilane reacts with water to produce dimethylsilanediol which self-polymerizes.

In addition, the pH of the first aqueous solution is maintained at 6 to 9 in the liquid area 110, so that an effect of suppressing corrosion of the apparatus and internal materials, which may occur when the first aqueous solution is strongly acidic, may be expected.

Meanwhile, the lower discharge stream of the column and the upper discharge flow of the liquid area 110 may include hydrogen chloride. Herein, the hydrogen chloride may be hydrogen chloride which is not neutralized in the liquid area 110 by a basic material included in the lower discharge flow of the packing area 120. Specifically, the lower discharge stream of the column may include hydrochloric acid dissolved in water, and the upper discharge flow of the liquid area 110 may include a hydrogen chloride gas which is not dissolved in water.

According to an exemplary embodiment of the present invention, chlorine included in the upper discharge flow of the liquid area may be 10 ppm to 0.1 parts by weight based on 1 part by weight of chlorine in the chlorosilane-based compound included in the feed stream. It may refer to a degree at which the chlorosilane-based compound or a chlorine compound derived therefrom in the liquid area 110 does not react with the water or the basic material and rises as a gas phase. Specifically, when the chlorosilane-based compound reacts with water in the liquid area 110, a residence time of chlorine in the liquid area 110 may be increased in the process of conversion into hydrogen chloride, and thus, a time for hydrogen chloride produced to be dissolved in water or to undergo a mechanism of being neutralized with the basic material may be secured. Thus, the amount of gaseous chlorine which does not react in the liquid area 110 and rise may be minimized.

Meanwhile, a pump 5 may be provided in the lower portion of the column 100, and the pump 5 may serve to discharge a part of the first aqueous solution to the lower portion of the column 100, while maintaining the liquid area 110 filled with the first aqueous solution in the column 100. Therefore, a part of the first aqueous solution which is discharged to the lower portion of the column 100 through the pump 5 may be included in the lower discharge stream of the column.

The method for treating a chlorosilane-based compound according to an exemplary embodiment of the present invention may include introducing the upper discharge flow of the liquid area 110 to the packing area 120 placed above the liquid area 110.

The upper discharge flow of the liquid area 110 may include a gaseous component rising from the liquid area 110. Specifically, the upper discharge flow of the liquid area 110 may further include a nitrogen gas and an unreacted chlorosilane-based compound, in addition to the hydrogen chloride gas. Herein, the nitrogen gas may be introduced to the column 100 through the nitrogen stream 2, and the unreacted chlorosilane-based compound may be a chlorosilane-based compound which does not react with water in the liquid area 110. The upper discharge flow of the liquid area 110 may rise and be introduced to the packing area 120.

According to the present invention, the packing area 120 may include random packing, and the random packing may include one or more of a Raschig ring, a Pall ring, a CMR ring, an IMTP ring, a Berl saddle, and Metal Hypac. The packing area 120 includes the random packing, so that heat transfer and/or mass transfer between gas and liquid supplied into the column 100 may be increased.

A length of the packing area 120 may be 100 mm to 1000 mm, specifically 100 mm to 1000 mm. Herein, the length of the packing area 120 may refer to a length of a cross section of the packing area 120 in a vertical direction. As such, when the length of the packing area 120 is within the range, a contact area between gas and liquid introduced to the packing area 120 may be increased. Specifically, a countercurrent contact between the upper discharge flow of the liquid area 110 and the second aqueous solution described later is sufficiently performed in the packing area 120, so that the neutralization reaction of the hydrogen chloride gas included in the upper discharge flow of the liquid area 110 and the basic material included in the second aqueous solution may be more activated. Therefore, the amount of hydrogen chloride discharged to the upper portion of the column 100 may be significantly decreased.

The method for treating a chlorosilane-based compound according to an exemplary embodiment of the present invention may include supplying a second aqueous solution including the basic material to a distribution area 130 placed above the packing area 120, and introducing the second aqueous solution supplied to the distribution area 130 to the packing area 120.

Specifically, the second aqueous solution may be derived from a mixed stream in which a part of the lower discharge stream of the column and a basic stream 3 including the basic material are mixed. As described above, a part of the first aqueous solution may be discharged through the lower discharge stream of the column, and the lower discharge stream of the column may diverge. Specifically, a part of the lower discharge stream of the column may be mixed with the basic stream 3 including the basic material and circulated to the column 100 as the second aqueous solution, and a remainder may be supplied to a wastewater treatment process for treating it as wastewater. Therefore, the second aqueous solution includes the components of the first aqueous solution, but the content of the basic material included in the second aqueous solution may be higher than the content of the basic material included in the first aqueous solution.

Specifically, in the wastewater treatment process, by-products included in the lower discharge stream of the column 100, for example, solid silicon dioxide and liquid dimethylsilanediol may be discarded. More specifically, the silicon dioxide may be discarded as a solid phase, and the dimethylsilanediol may be decomposed by a biological treatment.

Meanwhile, a part of the lower discharge stream of the column is mixed with the basic stream 3 and circulated to the column 100, so that the components which are included in the lower discharge stream of the column without reacting in the liquid area 110 and/or the packing area 120 and discharged, for example, the basic material may be recirculated to the column 100 and reacted.

That is, in order to treat chlorine, when fresh water or basic aqueous solution is continuously supplied to the column 100 without circulating a part of the lower discharge stream of the column to the column 100, the reactant may be lost, and thus, a part of the lower discharge stream of the column including water and the basic material may be circulated to the column 100 and reused as the reactant. Meanwhile, when the lower discharge stream of the column has a high pollution level, fresh water may be further supplied to the column 100.

The basic material may include one or more selected from the group consisting of potassium hydroxide (KOH), barium hydroxide (Ba(OH)₂), and sodium hydroxide (NaOH). When the basic material is neutralized with hydrogen chloride, a chloride salt and water are produced and the chloride salt is treated by being dissociated in water, which may be preferred in terms of chlorine treatment.

That is to say, the second aqueous solution may be supplied to the column 100, and specifically, may be supplied to the distribution area 130 in the column 100. In the distribution area 130, a distributer may be provided so that the second aqueous solution is sprayed toward the packing area 120. The second aqueous solution may be uniformly introduced to the packing area 120 through the distributor.

The content of the basic material included in the basic stream 3 may be 1 to 5 wt%, specifically 1 to 3 wt%. The basic stream 3 may include a basic aqueous solution including the basic material. In the case in which the content of the basic material included in the basic stream 3 is within the range, when the basic stream 3 is mixed with a part of the lower discharge stream of the column and introduced to the packing area 120 as the second aqueous solution, the neutralization reaction of the basic material and the hydrogen chloride may be promoted. Furthermore, the lower discharge flow of the packing area 120 including a product of the neutralization reaction of the basic material and the hydrogen chloride is introduced to the liquid area 110, so that the pH of the first aqueous solution included in the liquid area 110 may be maintained at 6 to 9.

The method for treating a chlorosilane-based compound according to an exemplary embodiment of the present invention may include neutralizing hydrogen chloride included in the upper discharge flow of the liquid area 110 and the basic material in the second aqueous solution in the packing area 120 to obtain a lower discharge flow of the packing area 120 including a chloride salt and an upper discharge stream of the column.

Since the upper discharge flow of the liquid area 110 moves upward as a gas phase and the second aqueous solution moves downward as a liquid phase, the hydrogen chloride included in the upper discharge flow of the liquid area 110 and the basic material included in the second aqueous solution may be brought into contact in the packing area 120 in a countercurrent manner and neutralized.

According to an exemplary embodiment of the present invention, the neutralization reaction occurring in the packing area 120 may be performed according to the following Reaction Formula 3:

[Reaction Formula 3] SiO₂ + HCl + NaOH → SiO₂ + NaCl + H₂O

Referring to the above Reaction Formula 3, when sodium hydroxide as the basic material is neutralized with hydrogen chloride, sodium chloride and water may be produced. Specifically, the sodium chloride is dissolved in water and falls to the liquid area 110.

Thus, since the hydrogen chloride gas which is not dissolved in water and rise in the liquid area 110 may be neutralized in the packing area 120, the amount of the hydrogen chloride discharged to the upper portion of the column 100 may be minimized. In particular, since the hydrogen chloride gas and the basic material may be brought into contact more effectively in the packing area 120, the neutralization reaction of the hydrogen chloride gas and the basic material may be promoted. In addition, the hydrogen chloride gas is neutralized with the basic compound, so that the hydrogen chloride gas may be treated as wastewater in the form of a chloride salt. Thus, chlorine may be treated in an environmentally friendly manner as compared with the treatment of the chlorosilane-based compound by incineration.

Meanwhile, as described above, the upper discharge flow of the liquid area 110 may further include an unreacted chlorosilane-based compound, in addition to the hydrogen chloride gas. Since water is present also in the packing area 120 by the second aqueous solution, the unreacted chlorosilane-based compound may react with water in the packing area 120. Thus, hydrogen chloride may be further produced in the packing area 120 also, and this may be neutralized with the basic material.

That is, the hydrogen chloride gas rising from the liquid area 110 and hydrogen chloride or hydrochloric acid produced in the packing area 120 may be neutralized with sodium hydroxide as the basic material in the packing area 120. Thus, the amounts of the hydrogen chloride gas and the unreacted chlorosilane-based compound included in the upper discharge flow of the liquid area 110 which do not react in the packing area 120 and are discharged to the upper portion of the column 100 sequentially through the packing area 120 and the distribution area 130 may be minimized. Therefore, since the concentration of chlorine which is included in the upper discharge stream of the column and discharged may be reduced, it may be preferred in terms of the environment.

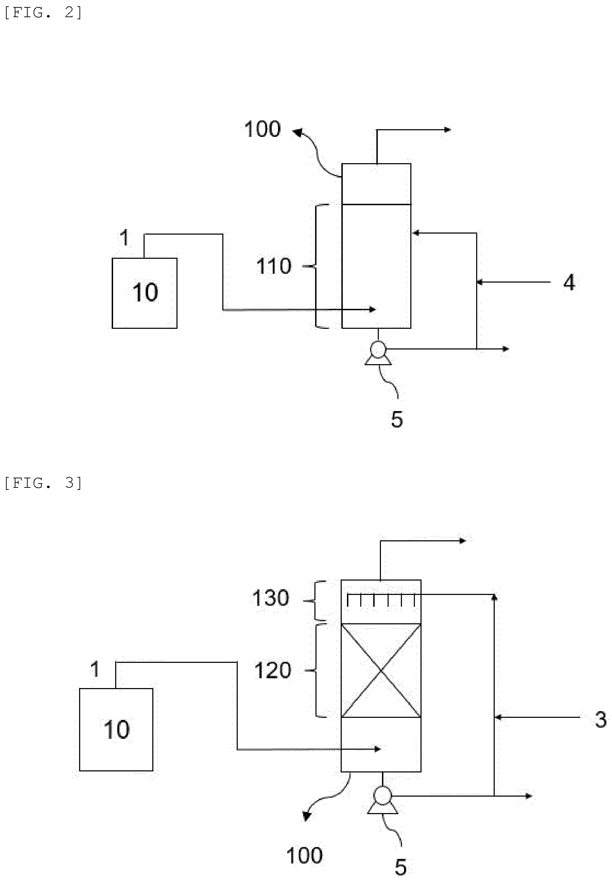

Meanwhile, referring to FIG. 2, conventionally, a feed stream including the chlorosilane-based compound is introduced to the liquid area including water in the column and the chlorosilane-based compound and water are reacted to produce hydrogen chloride which is dissolved in water. Thus, chlorine discharge is intended to be reduced, but it is difficult to control the amount of chlorine discharged to the upper portion of the column to a satisfactory level with environmental regulations only by reacting the chlorosilane-based compound with water.

In addition, for example, when the chlorosilane-based compound is dimethyldichlorosilane, the dimethyldichlorosilane and water react to produce dimethylsilanediol, which may be self-polymerized. The self-polymerization of dimethylsilanediol may be promoted, for example, in an acidic atmosphere or a basic atmosphere, or may be promoted when moisture is insufficient. Herein, the acidic atmosphere means that pH is less than 6, and the basic atmosphere means that pH is more than 9. In this case, water and polydimethylsiloxane are produced by self-polymerization of dimethylsilanediol, and fouling in which the polydimethylsiloxane blocks a pipe or an apparatus may occur. Herein, the self-polymerization of the dimethylsilanediol may proceed by the reaction shown in the following Reaction Formula 4:

[Reaction Formula 4] nHO-[(CH₃)₂-Si]-OH → HO-[(CH₃)₂-Si-O]ₙ-H + (n-1)H₂O

Regarding this, according to the present invention, first, the chlorosilane-based compound may be reacted with water in the liquid area 110 to convert chlorine included in the chlorosilane-based compound into hydrogen chloride. A part of the hydrogen chloride converted as such is dissolved in water and treated as wastewater, and the remainder which is not dissolved in water may be further neutralized with the basic compound as a hydrogen chloride gas. The hydrogen chloride gas is neutralized with the basic compound as such, thereby treating the environmentally harmful hydrogen chloride gas to a chloride salt. Thus, in treating the chlorosilane-based compound, chlorine may be treated in an environmentally friendly manner based on water, and the costs involved in the treatment is also low, which is thus preferred. Furthermore, hydrogen chloride which is not dissolved in water, that is, hydrogen chloride gas is further reacted with the basic material to treat it in the form of a chloride salt, thereby effectively preventing chlorine discharge, as compared with the conventional technology.

In addition, in the present invention, the pH of the first aqueous solution included in the liquid area 110 is maintained at 6 to 9 and the temperature is controlled to 50°C or lower, so that a side reaction occurring in the reaction of the chlorosilane-based compound and water, for example, the self-polymerization of dimethylsilanediol occurring when the chlorosilane-based compound is dimethyldichlorosilane may be reduced to prevent fouling.

Meanwhile, according to the present invention, the lower discharge flow of the packing area 120 including water and the chloride salt and the upper discharge flow of the packing area 120 including nitrogen gas may be obtained by the neutralization reaction occurring in the packing area 120. Herein, the nitrogen gas may be a nitrogen gas which is introduced to the column 100 through a nitrogen stream 2, but rises without reacting sequentially through the liquid area 110 and the packing area 120.

The lower discharge flow of the packing area 120 moves downward to the liquid area 110 as a liquid phase, and the upper discharge flow of the packing area 120 may move upward to the distribution area 130 as a gas phase. Specifically, the upper discharge flow of the packing area 120 is included in the upper discharge stream of the column and discharged to the atmosphere.

According to an exemplary embodiment of the present invention, the upper discharge stream of the column may include 0 to 4 ppm of the hydrogen chloride, 0.8 to 1 part by weight of nitrogen gas, and a residual amount of gaseous components, based on a total of 1 part by weight of the upper discharge stream of the column. Specifically, gaseous hydrogen chloride among hydrogen chloride which is not neutralized in the liquid area 110 and the packing area 120 may be included in the upper discharge stream of the column as hydrogen chloride gas, but a lower content of hydrogen chloride included in the upper discharge stream of the column may be preferred in terms of the environment. Therefore, in the present invention, the hydrogen chloride gas present in the column 100 is neutralized with the basic material by supplying the second aqueous solution including the basic material, so that the content of hydrogen chloride included in the upper discharge stream of the column may be minimized.

Meanwhile, as described above, the lower discharge flow of the packing area 120 may further include a basic material which is not neutralized with hydrogen chloride in the packing area 120, for example, sodium hydroxide. Therefore, a neutralization reaction of the hydrogen chloride and the basic material may proceed in the liquid area 110 also. However, though the hydrogen chloride is neither neutralized with the basic material nor dissolved in water and rises as a hydrogen chloride gas in the liquid area 110, the neutralization reaction further proceeds in the packing area 120 also, and thus, the amount of the hydrogen chloride discharged to the upper portion of the column 100 may be reduced.

Hereinafter, the present invention will be described in more detail by the examples. However, the following examples are provided for illustrating the present invention, and it is apparent to a person skilled in the art that various modifications and alterations may be made without departing from the scope and spirit of the present invention, and the scope of the present invention is not limited thereto.

### Examples

### Example 1

According to the process flow illustrated in FIG. 1, a treatment process of a chlorosilane-based compound was performed.

Specifically, a stream including silicon tetrachloride and dimethyldichlorosilane which are chlorosilane-based compounds discharged to the upper portion of a storage tank 10 was mixed with a nitrogen stream 2 including nitrogen gas to obtain a feed stream 1, and the feed stream 1 was introduced to the liquid area 110 including a first aqueous solution in the column 100. At this time, the feed stream was introduced at a height of 50% downward from a liquid level of the liquid area 110. The pH of the first aqueous solution included in the liquid area 110 was 7.

In the liquid area 110, silicon tetrachloride and dimethyldichlorosilane reacted with water to produce hydrogen chloride, silicon dioxide, and dimethylsilanediol. Sodium hydroxide introduced to the liquid area 110 through the lower discharge stream of the packing area 120 described later was neutralized with the hydrogen chloride to produce water and sodium chloride. A gas phase among the hydrogen chloride which was not neutralized with sodium hydroxide in the liquid area 110 was included in the upper discharge flow of the liquid area 110 as a hydrogen chloride gas. The upper discharge flow of the liquid area 110 further included nitrogen gas and an unreacted chlorosilane-based compound (silicon tetrachloride and dimethyldichlorosilane). Chlorine included in the upper discharge flow of the liquid area was 10 ppm, based on 1 part by weight of chlorine in the chlorosilane-based compound included in the feed stream.

Meanwhile, the lower discharge stream of the column included a part of the first aqueous solution, specifically, hydrogen chloride, sodium chloride, silicon dioxide, and dimethylsilanediol. The lower discharge stream of the column was discharged by a pump 5 provided in the lower portion of the column 100.

The upper discharge flow of the liquid area 110 was introduced to the packing area 120 placed above the liquid area 110. The length of the packing area 120 was 300 mm. Meanwhile, the lower discharge stream of the column diverged, and a part of the lower discharge stream of the column was mixed with a basic stream 3 including sodium hydroxide and supplied to a distribution area 130 as the second aqueous solution, and the remainder was treated as wastewater. The content of sodium hydroxide as the basic material included in the basic stream 3 was 1 wt%.

The second aqueous solution supplied to the distribution area 130 was introduced to the packing area 120, and the hydrogen chloride gas included in the upper discharge flow of the liquid area 110 and sodium hydroxide included in the second aqueous solution were neutralized. In addition, an unreacted chlorosilane-based compound included in the upper discharge flow of the liquid area 110 reacted with water in the packing area 120 to produce hydrogen chloride. Thus, the lower discharge flow of the packing area 120 including water and sodium chloride and the upper discharge flow of the packing area 120 including nitrogen gas were obtained. At this time, the lower discharge flow of the packing area 120 further included sodium hydroxide, hydrogen chloride, silicon dioxide, and dimethylsilanediol.

The upper discharge flow of the packing area 120 was discharged through the upper discharge stream of the column through the distribution area 130. The upper discharge stream of the column included 0 ppm of hydrogen chloride, 0.99 parts by weight of nitrogen, and a residual amount of gaseous components, based on a total of 1 part by weight of the upper discharge stream of the column. Meanwhile, the lower discharge flow of the packing area 120 was introduced to the liquid area 110.

As a result, Example 1 had a hydrogen chloride content of 0 ppm in the upper discharge stream of the column, and thus, was confirmed to have no chlorine discharged to the upper portion of the column 100. In addition, since there was no fouling due to polymers produced by the side reaction during the reaction occurring in the column, long-term operation of the process is allowed.

### Example 2

A chlorosilane-based compound was treated by the same process flow as in Example 1, except that the pH of the first aqueous solution included in the liquid area was maintained at 5.5.

As a result, the content of hydrogen chloride included in the upper discharge stream of the column was 2 ppm based on a total of 1 part by weight of the upper discharge stream of the column. Since in Example 2, in order to control the pH of the first aqueous solution included in the liquid area to 5.5, the flow rate of the basic stream was decreased as compared with Example 1, the neutralization reaction of the hydrogen chloride and the basic material slowly occurs, and thus, it was confirmed that the content of hydrogen chloride included in the upper discharge stream of the column was increased as compared with Example 1.

In addition, fouling occurred in the pump and the upper pipe of the storage tank to prevent long-term operation of the process. This is because self-polymerization of dimethylsilanediol was promoted under the acidic atmosphere of the liquid area to produce polydimethylsiloxane in a large amount.

### Example 3

A chlorosilane-based compound was treated by the same process flow as in Example 1, except that the pH of the first aqueous solution included in the liquid area 110 was maintained at 10.

As a result, the content of hydrogen chloride included in the upper discharge stream of the column was 0 ppm based on a total of 1 part by weight of the upper discharge stream of the column, but fouling occurred in the pump and the upper pipe of the storage tank to prevent long-term operation of the process. This is because self-polymerization of dimethylsilanediol was promoted under the basic atmosphere of the liquid area to produce polydimethylsiloxane in a large amount.

Meanwhile, it was confirmed that the content of hydrogen chloride in the upper discharge stream of the column in Example 3 was lower than that in Example 2. Regarding this, in Example 3, in order to control the pH of the first aqueous solution included in the liquid area to 10, the flow rate of the basic stream was increased as compared with Example 2, thereby promoting the reaction of the basic material and the hydrogen chloride. Therefore, there was no hydrogen chloride discharged to the upper portion of the column 100.

### Comparative Examples

### Comparative Example 1

According to the process flow illustrated in FIG. 2, a treatment process of a chlorosilane-based compound was performed.

Specifically, a feed stream 1 including silicon tetrachloride and dimethyldichlorosilane which were chlorosilane-based compounds discharged to the upper portion of the storage tank 10 was introduced to the liquid area 110 including water in the column 100.

In the liquid area, silicon tetrachloride and dimethyldichlorosilane reacted with water to produce hydrogen chloride. A part of the hydrogen chloride produced as such was dissolved in water to produce a hydrochloric acid aqueous solution which was included in the liquid area 110, and the residual hydrogen chloride which was not dissolved in water rose as a hydrogen chloride gas The pH of the hydrochloric acid aqueous solution included in the liquid area was 2 to 3. Thus, the upper discharge flow of the liquid area 110 including the hydrogen chloride gas and the lower discharge stream of the column including a part of the hydrochloric acid aqueous solution were obtained. The lower discharge stream of the column further included silicon dioxide and dimethylsilanediol, and the upper discharge flow of the liquid area 110 included nitrogen gas and an unreacted chlorosilane-based compound (silicon tetrachloride and dimethyldichlorosilane).

A part of the lower discharge stream of the column mixed with a water stream 4 including water and supplied to the liquid area 110, and the remainder was treated as wastewater. Meanwhile, the upper discharge flow of the liquid area 110 was included in the upper discharge stream of the column and discharged to the atmosphere. The content of hydrogen chloride included in the upper discharge stream of the column was 5 to 10 ppm based on a total of 1 part by weight of the upper discharge stream of the column.

In Comparative Example 1, since nitrogen gas was not included in the feed stream as compared with Example 1, moisture in the liquid area 110 flowed back toward the storage tank 10 in a gas state, and dimethylsilanediol was produced in the upper pipe of the storage tank 10. The dimethylsilanediol produced as such was self-polymerized to produce polydimethylsiloxane in the situation in which backflow of moisture stopped and the moisture evaporated and moved to the column 100 again, which prevented long-term operation of the process.

In addition, in Comparative Example 1, since the second aqueous solution including the basic material was not supplied to the column 100, as compared with Example 1, it was confirmed that though the process was operated, the content of hydrogen chloride included in the upper discharge stream of the column was higher than that of Example 1. This is because the hydrogen chloride produced by a reaction of the chlorosilane-based compound and water was not dissolved in water included in the liquid area 110 and rose as a gas state, and was discharged to the upper portion of the column.

### Comparative Example 2

According to the process flow illustrated in FIG. 3, a treatment process of a chlorosilane-based compound was performed.

In Comparative Example 2, the chlorosilane-based compound was treated without being provided with the liquid area including the first aqueous solution in the column, as compared with Example 1.

Specifically, a feed stream 1 including silicon tetrachloride and dimethyldichlorosilane which were chlorosilane-based compounds discharged to the upper portion of the storage tank 10 was introduced to the lower portion of the column 100. More specifically, the feed stream 1 was introduced to a portion lower than the packing area 120, and the feed stream 1 rose and was introduced to the packing area 120.

Meanwhile, the basic aqueous solution including sodium hydroxide was supplied to the distribution area 130 placed above the packing area 120, and the basic aqueous solution fell and was introduced to the packing area 120.

In the packing area 120, the feed stream 1 and the basic aqueous solution were brought into contact in a countercurrent manner, and the silicon tetrachloride and dimethyldichlorosilane included in the feed stream 1 and water included in the basic aqueous solution reacted to produce hydrogen chloride, silicon dioxide, and dimethylsilanediol. The hydrogen chloride produced as such was neutralized with sodium hydroxide included in the basic aqueous solution to produce sodium chloride and water.

That is, the reaction occurring in the packing area 120 was performed by including the reaction of the chlorosilane-based compound and water and the neutralization reaction of hydrogen chloride and sodium hydroxide. Thus, the upper discharge flow of the packing area 120 including hydrogen chloride and the lower discharge flow of the packing area 120 including silicon dioxide, dimethylsilanediol, sodium chloride, and water were obtained.

The upper discharge flow of the packing area 120 was included in the upper discharge stream of the column through the distribution area 130, and the lower discharge flow of the packing area 120 was included in the lower discharge stream of the column. The content of hydrogen chloride included in the upper discharge stream of the column was 3 to 6 ppm based on a total of 1 part by weight of the upper discharge stream of the column. A part of the lower discharge stream of the column was mixed with the basic stream 3 including sodium hydroxide and supplied to the distribution area 130 as the basic aqueous solution, and the remainder was treated as wastewater.

As a result, it was confirmed in Comparative Example 2 that the content of hydrogen chloride in the upper discharge stream of the column was increased as compared with Example 1. Specifically, in Comparative Example 2 in which the liquid area including the first aqueous solution was not provided as compared with Example 1, a residence time in the packing area was decreased in the process of reacting the chlorosilane-based compound and water to be converted into hydrogen chloride, and thus, a time undergoing a mechanism in which produced hydrogen chloride was dissolved in water was also significantly decreased. In addition, when the chlorosilane-based compound passed through the liquid area including water, gas (hydrogen chloride) produced by natural convection may be evenly dispersed, but in Comparative Example 2 in which no liquid area was present, maldistribution of hydrogen chloride occurred, so that mass transfer efficiency between gas and liquid in the packing area was rapidly decreased.

### [Description of symbols]

1: Feed stream
2: Nitrogen stream
3: Basic stream
4: Water stream
5: Pump
10: Storage tank
100: Column
110: Liquid area
120: Packing area
130: Distribution area

## Claims

1. A method for treating a chlorosilane-based compound, the method comprising:
introducing a feed stream including a chlorosilane-based compound to a liquid area of a column, the liquid area including a first aqueous solution and reacting the chlorosilane-based compound with water to obtain an upper discharge flow of the liquid area including a hydrogen chloride gas;
introducing the upper discharge flow of the liquid area to a packing area placed above the liquid area;
supplying a second aqueous solution including a basic material to a distribution area placed above the packing area and introducing the second aqueous solution supplied to the distribution area to the packing area; and
neutralizing the hydrogen chloride gas included in the upper discharge flow of the liquid area and the basic material included in the second aqueous solution in the packing area to obtain a lower discharge flow of the packing area including a chloride salt and an upper discharge stream of the column.

2. The method for treating a chlorosilane-based compound of claim 1, wherein the feed stream including the chlorosilane-based compound further includes a nitrogen gas.

3. The method for treating a chlorosilane-based compound of claim 1, wherein a pH of the first aqueous solution included in the liquid area is maintained at 6 to 9.

4. The method for treating a chlorosilane-based compound of claim 1,
wherein a part of the first aqueous solution is discharged through the lower discharge stream of the column, and
the second aqueous solution is derived from a mixed stream in which a part of the lower discharge stream of the column and a basic stream including the basic material are mixed.

5. The method for treating a chlorosilane-based compound of claim 4, wherein a content of the basic material included in the basic stream is 1 to 5 wt%.

6. The method for treating a chlorosilane-based compound of claim 1, wherein the basic material includes one or more selected from the group consisting of potassium hydroxide (KOH), barium hydroxide (Ba(OH)₂), and sodium hydroxide (NaOH).

7. The method for treating a chlorosilane-based compound of claim 1, wherein a temperature of the liquid area is 20 to 50°C.

8. The method for treating a chlorosilane-based compound of claim 2, wherein the upper discharge stream of the column includes 0 to 4 ppm of the hydrogen chloride, 0.8 to 1 part by weight of nitrogen, and a residual amount of gaseous components, based on a total of 1 part by weight of the upper discharge stream of the column.

9. The method for treating a chlorosilane-based compound of claim 1, wherein the chlorosilane-based compound includes one or more of dichlorosilane (H₂Cl₂Si), trichlorosilane (HCl₃Si), hexachlorodisilane (Cl₆Si₂), tetrachlorosilane (SiCl₄), and dimethyldichlorosilane (C₂H₆Cl₂Si).

10. The method for treating a chlorosilane-based compound of claim 1, wherein chlorine included in the upper discharge flow of the liquid area is 10 ppm to 0.1 parts by weight based on 1 part by weight of chlorine in the chlorosilane-based compound included in the feed stream.
